# EUROPÄISCHE PATENTSCHRIFT

(11) **EP 1 926 924 B1**
(45) Veröffentlichungstag und Bekanntmachung des Hinweises auf die Patenterteilung: **13.01.2010**
(21) Anmeldenummer: 06791802.9
(22) Anmeldetag: 03.09.2006
(51) Int. Cl.: F16H 21/38, F16H 21/20, F16C 3/28, B62M 3/04

(54) **KURBELTRIEB MIT EINER VORRICHTUNG ZUR PERIODISCHEN ÄNDERUNG DER LÄNGE VON DESSEN WIRKSAMEN HEBEL**
CRANK DRIVE WITH A DEVICE FOR PERIODIC CHANGES TO THE LENGTH OF THE EFFECTIVE LEVER THEREOF
MECANISME A MANIVELLE COMPRENANT UN DISPOSITIF POUR REALISER UNE MODIFICATION PERIODIQUE DE LA LONGUEUR DE SON LEVIER ACTIF

(30) Priorität: 03.09.2005 DE 202005013966 U
(43) Veröffentlichungstag der Anmeldung: 04.06.2008
(73) Patentinhaber: Schuhwerk, Christoph, 86476 Neuburg/Kammel (DE)
(72) Erfinder: Schuhwerk, Christoph, 86476 Neuburg/Kammel (DE)
(74) Vertreter: Fiener, Josef
(86) Internationale Anmeldenummer: PCT/EP2006/008592
(87) Internationale Veröffentlichungsnummer: WO 2007/025779

(56) Entgegenhaltungen:
- WO-A-02/29280
- WO-A-2004/029481
- WO-A-2005/009832
- DE-A1- 3 025 621
- JP-A- 58 200 851
- US-A- 610 175
- US-A- 4 960 013

## Beschreibung

Die vorliegende Erfindung betrifft einen Kurbeltrieb mit einer Vorrichtung zur periodischen Änderung der Länge von dessen wirksamem Hebel entsprechend dem Oberbegriff des Anspruches 1.

Ein derartiger Kurbeltrieb ist aus der DE 30 25 621 A1 bekannt.

Es wurden im Laufe der Zeit immer wieder Versuche unternommen, bei einem Kurbeltrieb die effektiv wirksame Hebellänge zu verändern, um beispielsweise eine höhere Leistungsausbeute durch Ausnutzen eines längeren Hebels zum Zeitpunkt der Kraftabgabe und eines dementsprechend verkürzten Hebels im Bereich der Totpunkte zu erzielen, Dieses Problem wurde bisher jedoch noch nicht befriedigend gelöst. So wurde beispielsweise bei der aus der US 4,960,013 bekannten Fahrradkurbelanordnung eine teleskopische Ausziehbarkeit der Kurbel vorgesehen. Die Periodizität der Längenänderung der Kurbel wird durch eine Nockenfolgesteuerung erzielt. Diese Konstruktion ist jedoch sehr aufwendig und teuer.

Ein anderer Weg wurde bei der US 610, 175 gegangen, bei der die Länge der Tretkurbel abhängig von der Drehzahl der Tretbewegung und damit abhängig von der Fliehkraft verändert wird. Wird dabei die Drehzahl erhöht, wird die Länge der Kurbel vergrößert, wobei die somit eingestellte Kurbellänge bei gleichbleibender Drehzahl konstant gehalten und erst wieder reduziert wird, wenn auch die Drehzahl wieder absinkt. Daher ist auch diese Lösung nicht befriedigend.

Der vorliegende Erfindung liegt die Aufgabe zugrunde, einen Kurbeltrieb zu schaffen, bei dem sich die Länge des wirksamen Hebels periodisch selbständig ohne Zutun des Betreibers ändert und an die individuellen Vorgaben des Benutzers angepasst werden kann. Außerdem sollen der konstruktive Aufwand und die Herstellungskosten niedrig gehalten werden und gleichzeitig eine zuverlässige, langlebige Ausführung des Kurbeltriebs gewährleistet werden.

Diese Aufgabe wird durch einen erfindungsgemäßen Kurbeltrieb gemäß Anspruch 1 gelöst. Vorteilhafte Weiterbildungen der Erfindung sind Gegenstand der abhängigen Ansprüche.

Zur Lösung der vorgenannten Aufgabe ist erfindungsgemäß vorgesehen, die Länge des wirksamen Hebels des Kurbeltriebs durch Verwendung eines Hohlrads und eines damit kämmenden Planetenrads periodisch zu ändern, und zwar allgemein gesagt durch Zwischenschaltung dieser Baueinheit aus Hohlrad und Planetenrad zwischen die Kraftankopplungsvorrichtung (bei einem Fahrrad beispielsweise das Pedal) und die Welle, auf die die Antriebskraft übertragen werden soll. Für die Anordnung dieser Baueinheit ist das Hohlrad am freien Ende der Kurbel - entweder abnehmbar oder einstückig mit dieser ausgebildet - vorgesehen und somit mit der Kurbel bewegbar sein, wobei das Pedal drehfest mit dem Planetenrad verbunden ist. Hierbei ist eine präzise Periodizität der Längenänderung und damit eine Wiederholbarkeit der jeweiligen Kurbellängen durch die entsprechende Lagerung des mit dem Hohlrad kämmenden Planetenrads gewährleistet.

Eine besonders einfache Möglichkeit, den erfindungsgemäßen Kurbeltrieb als Nachrüstbausatz auszubilden, besteht darin, das Hohlrad so gestalten, dass es in das Pedalgewinde einer herkömmlichen Fahrradkurbel einschraubbar, also in Axialrichtung mit der Kurbel verbindbar ist. Für die Neuausrüstung von Fahrrädern kann es hingegen zwecksmäßig sein, zur Verringerung des konstruktiven Aufwands die Kurbel einstückig mit dem Hohlrad auszubilden.

Eine besonders robuste und dennoch einfache Möglichkeit der Lagerung des Planetenrads ergibt sich dadurch, dass zwei Lagerscheiben vorgesehen werden, welche die beiden Stirnseiten des Hohlrads bedecken und zentrisch am Hohlrad drehbar gelagert sind. Diese beiden Lagerscheiben weisen eine Lagerung für eine drehbewegliche Lagerung des Planetenrads auf. Als Alternative ist es, wenn beispielsweise Einblick in den konstruktiven Aufbau der Baueinheit aus Hohlrad und Planetenrad gewährt werden soll, vorgesehen, das Planetenrad im Bereich eines ersten Endes eines Hebels drehbar zu lagern, der wiederum im Bereich seines anderen Endes im Zentrum des Hohlrads drehbar gelagert ist.

Im Fall der Anwendung des erfindungsgemäßen Kurbeltriebs bei Fahrrädern ist dieser selbstverständlich weitestgehend punktsymmetrisch zu einem Punkt auf der Mittellinie der Welle ausgebildet. Da bei ist zur Kraftübertragung auf das Hinterrad an der Welle ein Kettenrad oder ein Zahnriemenrad angebracht, oder es kann eine Kardanwelle an der Welle angreifen, was insbesondere in Verbindung mit einer Nabenschaltung im Hinterrad eine gleichzeitig robuste und vielseitige Kraftübertragungsanordnung ergibt.

Wenn der erfindungsgemäße Kurbeltrieb zur Drehmomenterhöhung und damit Leistungssteigerung bei Kolbenmotoren eingesetzt wird, ist es zwecksmäßig, an dem Planetenrad bzw. der Kurbel eine für diese Zwecke ausgestaltete Vorrichtung für den Angriff einer Pleuelstange wie beispielsweise einen drehfest daran angebrachten Kurbelzapfen vorzusehen.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnung. Es zeigen:
Fig. 1 in Draufsicht eine erste Ausführungsform des erfindungsgemäßen Kurbeltriebs in der Anwendung bei einem Fahrrad,
Fig. 2 eine Darstellung in Seitenansicht der verschiedenen Stellungen des erfindungsgemäßen Kurbeltriebs gemäß Fig. 1 in verschiedenen Drehstellungen während eines Umlaufs,
Fig. 3 eine zweite Ausführungsform eines Kurbeltriebs in Draufsicht, ebenfalls am Beispiel eines Fahrrads, die aber nicht zur Erfindung gehört,
Fig. 4a - 4d eine Darstellung in Seitenansicht der verschiedenen Stellungen des erfindungsgemäßen Kurbeltriebs gemäß Fig. 3 in verschiedenen Drehstellungen während eines Umlaufs, und
Fig. 5a und Fig. 5b zwei Abwandlungen der zweiten Ausführungsform.

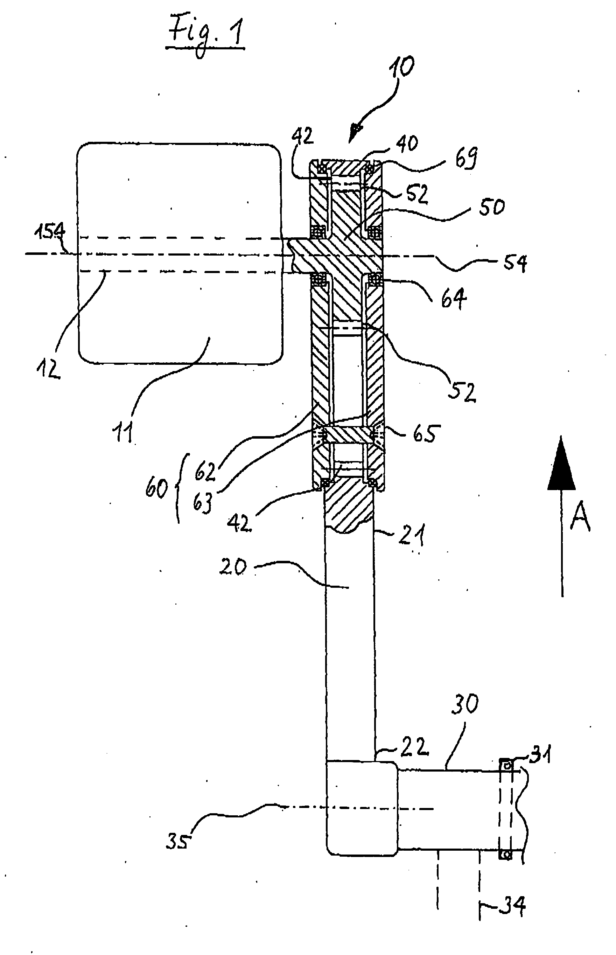

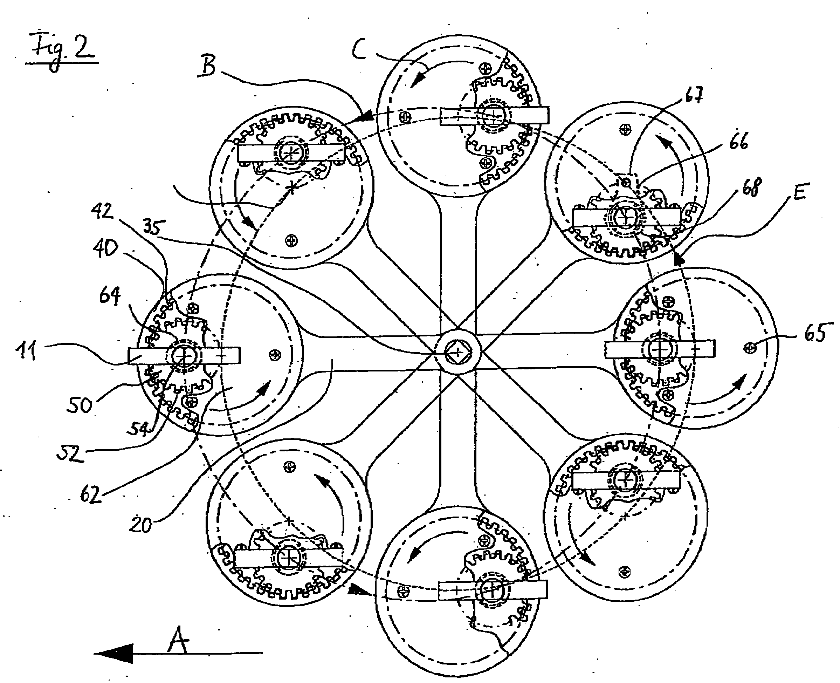

Wie aus Fig. 1 und 2 ersichtlich ist, ist bei der ersten Ausführungsform des erfindungsgemäßen Kurbeltriebs 10 auf die über ein Wellenlager 31 gelagerte Tretkurbelwelle oder kurz Welle 30 eines Fahrrads eine Kurbel 20 mit ihrem ersten, freien Ende 21 aufgesteckt, wobei in Fig. 1 der Einfachheit halber nur die linke Kurbel mit Pedal 11, das als Kraftankopplungsvorrichtung zum Einleiten der Antriebskraft dient, in waagrechter Stellung dargestellt ist. Selbstverständlich ist bei einem Fahrrad eine zweite, entsprechend punktsymmetrisch angeordnete Kurbel mit Pedal vorgesehen, was jedoch nicht zeichnerisch dargestellt ist. Das zweite Ende 22 der Kurbel 20 geht in ein Hohlrad 40 über, das eine Innenverzahnung 42 aufweist. In dem Hohlrad 40 ist ein Planetenrad 50 in ständig kämmendem Eingriff angeordnet, an dessen Achse 54 wiederum ein Pedal 11 drehfest befestigt ist. Es ist anzumerken, dass die Bezeichnungen "Hohlrad" und "Planetenrad" verwendet werden, obwohl bei dieser Verzahnung kein Sonnenrad vorgesehen ist. Dies dient einer knappen Bezeichnung dieser beiden Bestandteile und einer besseren Unterscheidbarkeit voneinander. Die Lagerung des Planetenrads 50 in ständig kämmendem Eingriff mit dem Hohlrad 40 erfolgt durch eine erste Lagereinrichtung 60, die zwei Lagerscheiben 62 und 63 umfasst, die die beiden offenen Stirnseiten des Hohlrads 40 bedecken und durch entsprechende Lager 69 koaxial zum Hohlrad 40 drehbar an diesem gelagert sind. Die beiden Lagerscheiben 62 und 63 weisen ein Lager 64 zur Lagerung des Planetenrads 50 auf. Die Außenverzahnung 52 des Planetenrads 50 kämmt dabei mit der Innenverzahnung 42 des Hohlrads 40. Die beiden Lagerscheiben 62 und 63 werden zum einen durch das Planetenrad 50 mit dem entsprechenden Lager 64 sowie durch Schrauben 65 relativ zueinander fixiert. Für die Übertragung der Antriebskraft von der Welle 33 auf das Hinterrad ist beispielsweise eine nur angedeutete Kardanwelle 34 vorgesehen, es kann jedoch auch ein Kettenrad oder ein Zahnriemenrad vorgesehen sein.

In Fig. 1 und 2 ist die Fahrtrichtung mit einem Pfeil A bezeichnet. Ein Pfeil E in Fig. 2 bezeichnet den Kreisbogen der Tretbewegung, wie sie sich bei einem "normalen" Kurbeltrieb für die Mitte der Pedalachse (hier im Zentrum des Hohlrads 40 angenommen) ergeben würde. Ein Pfeil B bezeichnet die sich bei der ersten Ausführungsform des erfindungsgemäßen Kurbeltriebs ergebende Tretbewegung, die der Kreisform stark angenähert ist, weshalb die sich erfindungsgemäß ergebende Tretbewegung als "runder Tritt" bezeichnet werden kann. Das hier dargestellte Beispiel geht von einem Übersetzungsverhältnis von 2:1 aus, das heißt, das Hohlrad 40 weist doppelt so viele Zähne auf wie das Planetenrad 50.

Durch das Betätigen des Pedals 11 wird die Kurbel 20 mit dem damit verbundenen Hohlrad 40 in Drehung versetzt, und das durch die Lagerscheiben 62 und 63 gelagerte Planetenrad 50 rollt durch das Kämmen in dem Hohlrad 40 ab. Dadurch wird eine periodische Änderung der Länge des wirksamen Hebels der Kurbel 20 und damit eine kontinuierlich wiederkehrende Änderung der effektiven Länge der Kurbel 20 erreicht. Dabei ist zu berücksichtigen, dass die auf das Pedal einwirkende Kraft nicht wie bei einem herkömmlichen Kurbeltrieb auf die Pedalachse wirkt, sondern auf den Angriffspunkt der Außenverzahnung 52 mit der Innenverzahnung 42. Somit wird bei der in Fig. 2 dargestellten 9-Uhr-Stellung des Pedals der effektive Hebel um den Radius des Hohlrads 40 verlängert, wobei der Horizontalversatz der Tretbewegung nur die Differenz der Radien des Hohlrads 40 und des Planetenrads 50 ausmacht. Demgegenüber wird die effektive Kurbellänge in der in Fig. 2 dargestellten 3-Uhr-Stellung um den Radius des Hohlrads 40 verkürzt. Aus Fig. 2 ist des Weiteren ersichtlich, dass der wirksame Hebel in 12-Uhr-Stellung und in 6-Uhr-Stellung, also in etwa dem Totpunkt, nahezu unverändert gegenüber dem "normalen" Kurbeltrieb ist, wobei anzumerken ist, dass der Totpunkt versetzt ist und sich nicht oberhalb des Achsmittelpunkts 35 der Welle 30 befindet.

Für den erfindungsgemäßen Kurbeltrieb 10 ist es wichtig, dass durch die Führung des drehfest mit dem Pedal 11 verbundenen Planetenrads 50 ein freies Drehen des Planetenrads 50 um seine eigene Achse verhindert wird, wodurch der beschriebene Bewegungsablauf erst ermöglicht wird. Es ist außerdem festzuhalten, dass der Mittelpunkt der Tretbewegung nicht mit dem Mittelpunkt 35 der Welle 30 zusammenfällt, also diese beiden Mittelpunkte in Horizontalrichtung gegeneinander verschoben sind. Ein entscheidender Gewinn an Drehmoment und dadurch Leistungsabgabe ergibt sich jedoch dadurch, dass der effektiv wirksame Hebel des Kurbeltriebs bei der Kraftabgabe, also beim Treten nach unten, deutlich größer als bei herkömmlichen Kurbeltrieben ist, während der Hebel bei der Bewegung aus der 6-Uhr-Stellung zurück über die 3-Uhr-Stellung in die 12-Uhr-Stellung verkürzt ist, wobei in diesem Bereich ohnehin keine oder nur eine geringe Leistungsabgabe zu verzeichnen ist. Durch die an der Kurbel 20 erfolgende Zunahme von deren wirksamem Hebel im Bereich der maximal möglichen Kraftabgabe wird bei in etwa gleichbleibendem Gesamttretweg somit eine wesentlich höhere Leitungsabgabe erreicht als bei herkömmlichen Kurbeltrieben.

In der 13:30-Uhr-Stellung der Kurbel von Fig. 2 ist eine Alternative für die Führung des Planetenrads 50 im Hohlrad 40 angedeutet. Statt der beiden Lagerscheiben 62 und 63 kann das Planetenrad auch durch einen Hebel 66 gelagert sein, der im Bereich seines ersten Endes 67 im Hohlrad 40 zentrisch drehbar gelagert ist und im Bereich seines zweiten Endes 68 das Planetenrad 50 drehbar lagert. Diese Konstruktionsweise bietet sich insbesondere dann an, wenn einem Betrachter der Blick auf die konstruktive Ausgestaltung dieser ersten Ausführungsform des erfindungsgemäßen Kurbeltriebs ermöglicht werden soll.

Abweichend von der obigen Darstellung, bei der das Hohlrad 40 einstückig mit der Kurbel 20 ausgebildet ist, kann das Hohlrad 40 zusammen mit dem Planetenrad 50 und dem damit fest verbundenen Pedal 11 als gesonderte Baueinheit hergestellt werden und zum Einschrauben in das Pedalgewinde eines herkömmlichen Fahrradkurbeltriebs ausgelegt sein. Auf diese Weise wird eine Nachrüstung eines herkömmlichen Fahrrads mit dem erfindungsgemäßen Kurbeltrieb mit minimalem Kostenaufwand ermöglicht. Dadurch kann auch ein Austausch des Hohlrads 40 und des Planetenrads 50 in einfacher Weise bewerkstelligt werden, um zum Beispiel einen Wechsel auf andere Durchmesser von Hohlrad und Planetenrad oder zu einem anderen Übersetzungsverhältnis vornehmen zu können.

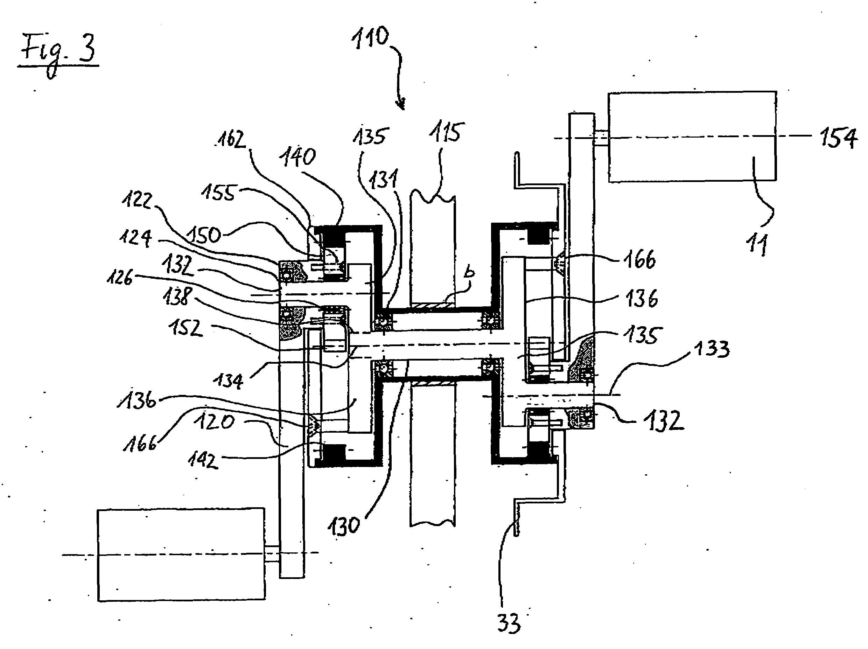

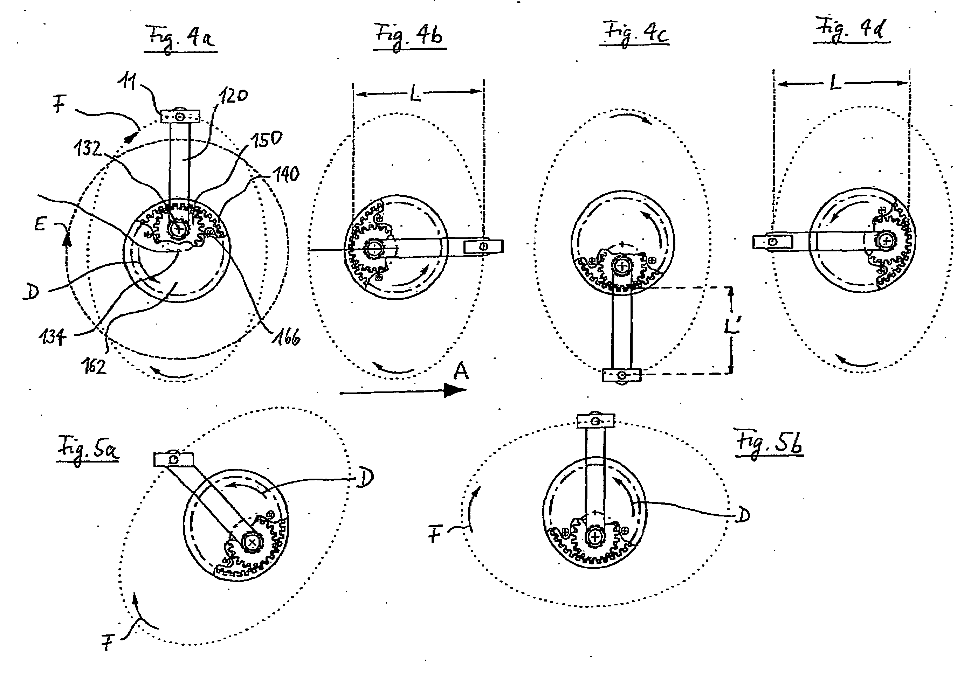

In den Fig. 3 und Fig. 4a - 4d ist eine zweite Ausführungsform eines Kurbeltriebs 110 dargestellt, die nicht zur Erfindung gehört. Während sich bei der ersten Ausführungsform das Hohlrad 40 außen an der Kurbel befand und somit bewegte, ist das Hohlrad 140 bei dieser Ausführungsform fest am Rahmen 115 eines Fahrrads und damit drehfest bezüglich des Wellenlagers 131 der Welle 130 befestigt. Auf die Welle 130, die axial außen einen herkömmlichen, nur angedeuteten Vierkant 138 aufweist, ist ein dreiarmiger Aufsatz aufgesteckt, wie er beispielsweise zur Anbringung eines Kettenrads bei Fahrrädern bekannt ist. Im Bereich eines Endes eines Arms 135 des Aufsatzes erstreckt sich eine Verlängerung 132 in Form eines Kurbelzapfens senkrecht zu dem Arm 135, d. h. also parallel zur Welle 130. Die Verlängerung 132 dient der drehbaren Lagerung eines Planetenrads 150, an dem eine Kurbel 120 mittels Schrauben 155 angebracht ist. Durch Drehlager 124 und 126 wird gewährleistet, dass sich das Planetenrad 150 und die Kurbel 120 um die Verlängerung 132 drehen können. Am freien Ende 121 der Kurbel 120 ist in bekannter Weise ein Pedal 11 angebracht. Das Planetenrad 150 weist eine Außenverzahnung 152 auf, mit der es mit einer Innenverzahnung 142 des Hohlrads 140 auf Grund der Lagerung und Positionierung durch die Verlängerung 132 und die Welle 130 in ständig kämmendem Eingriff gehalten wird. Wie aus Fig. 3 ersichtlich, ist das Hohlrad 140 becherförmig ausgebildet, wobei die als Becherboden ausgebildete Seite des Hohlrads dem Rahmen 115 zugewandt ist. Die offene Stirnseite des Hohlrads 140 wird durch eine Abdeckscheibe 162 abgedichtet, die durch Schrauben 166 an den beiden anderen Armen 136 des Dreiarms befestigt ist.

Auf der in Fig. 3 rechts vom Rahmen 115 dargestellten Seite des Kurbeltriebs ist ein Kettenblatt 33 mittels Schrauben 166 an den anderen beiden Armen 136 des Dreiarms angebracht. Anstelle des Kettenblatts 33 kann auch ein Zahnriemenrad für den Antrieb mittels eines Zahnriemens eingesetzt werden. Bis auf das Kettenblatt 33 ist der Kurbeltrieb 110 weitgehend punktsymmetrisch zu einem Punkt auf der Mittelachse 134 der Welle 130. Das Kettenblatt 33 kann auch an der inneren Seite zum Rahmen 115 hin angeordnet sein. Durch das Betätigen des Pedals 11 wird die Kurbel 120 in Drehung versetzt, und das Planetenrad 150 rollt durch das Kämmen in dem Hohlrad 140 ab. Dadurch wird eine periodische Änderung der Länge des wirksamen Hebels der Kurbel 120 und damit eine kontinuierlich wiederkehrende Änderung der effektiven Länge der Kurbel 120 erreicht. Dabei ist zu berücksichtigen, dass die auf das Pedal einwirkende Kraft nicht wie bei einem herkömmlichen Kurbeltrieb auf die Pedalachse wirkt, sondern auf den Angriffspunkt der Außenverzahnung 152 mit der Innenverzahnung 142. Die sich durch die zweite Ausführungsform des erfindungsgemäßen Kurbeltriebs 110 ergebende elliptische Tretbewegung ist in den Fig. 4a - 4d dargestellt, wobei die Positionen in 12-Uhr-Stellung, 3-Uhr-Stellung, 6-Uhr-Stellung bzw. 9-Uhr-Stellung dargestellt sind. Die von einem herkömmlichen Kurbeltrieb bekannte kreisrunde Tretbewegung ist wieder mit einem Pfeil E bezeichnet, während die sich durch die zweite Ausführungsform des erfindungsgemäßen Kurbeltriebs 110 angewendete elliptische Tretbewegung mit einem Pfeil F bezeichnet ist. Bei dieser Ausführungsform ist wiederum ein Übersetzungsverhältnis von 2:1 von Hohlrad 140 zu Planetenrad 150 angenommen, d. h., das Hohlrad 140 weist doppelt so viele Zähne auf wie das Planetenrad 150. Das Besondere bei dieser Ausführungsform wird ersichtlich, wenn die in Fig. 4b und 4d mit L bezeichnete wirksame, effektive Länge der Kurbel 120 und damit des Trethebels betrachtet wird. Sowohl in 3-Uhr-Stellung als auch in 9-Uhr-Stellung ist die effektive Länge des Hebels um den Radius des Hohlrads 40 um die Differenz der Radien des Hohlrads 140 und des Planetenrads 150 gegenüber einer Kurbel mit gleicher Länge vergrößert, in 6-Uhr-Stellung und in 12-Uhr-Stellung ist dagegen die wirksame Länge L' um den gleichen Betrag verkleinert, wie in 4c dargestellt. Somit kann sowohl beim Hinabtreten des Pedals 11 als auch beim Heraufziehen (was insbesondere durch die Klickpedale mit einer starren Verbindung zwischen Pedal und Schuh ermöglicht wird) ein größerer effektiver Hebel genutzt werden, was eine erhöhte Leistungsausbeute ermöglicht. Somit ergibt sich bei im Wesentlichen gleichbleibendem Gesamtweg der Tretbewegung gegenüber dem herkömmlichen kreisrunden Tretweg eine wesentlich größere Leistungsausbeute, die durch die sich periodisch wiederholende Änderung der wirksamen Länge des Trethebels erzielt wird.

Bei einer Pedalumdrehung, wobei der Drehsinn durch Pfeil F angegeben ist, dreht sich das Planetenrad 150 einmal um sich selbst. Das Besondere bei dieser Ausführungsform liegt außerdem darin, dass der Drehsinn des Planetenrads 150, angegeben durch einen Pfeil D, dem Drehsinn des Pedals genau entgegengesetzt ist. Das heißt, dass sich das Kettenblatt 33 somit "rückwärts" dreht, was durch eine entsprechende Überkreuzführung der Kette oder eines Zahnriemens wieder ausgeglichen werden kann. Wird statt Kette oder Zahnriemen eine Kardanwelle 34 eingesetzt, was in Fig. 1 schematisch angedeutet ist, stellt die Umkehrung der Drehrichtung kein Problem dar. Die sich bei dieser zweiten Ausführungsform ergebende Ellipsenform der Tretbewegung, genauer gesagt die Exzentrizität der Ellipse, kann durch Variation der Radien des Hohlrads und des Planetenrads eingestellt werden. Falls gewünscht, kann durch ein geändertes Übersetzungsverhältnis auch die Lage des längsten effektivsten Hebels beeinflusst werden, so dass beispielsweise die Lage des längsten effektiven Hebels von Umdrehung zu Umdrehung gleichsam wandert, was durch nicht-ganzzahlige Übersetzungsverhältnisse erzielt wird. Durch ein Übersetzungsverhältnis von 4:1 kann aber auch erreicht werden, dass der längste effektive Hebel immer in 3-Uhr-Stellung und der kürzeste effektive Hebel immer in 9-Uhr-Stellung (oder umgekehrt) vorliegt, was insbesondere bei Anwendung des erfindungsgemäßen Kurbeltriebs bei Motoren sehr vorteilhaft sein kann.

In Fig. 5a und 5b sind Variationen der zweiten Ausführungsform dargestellt, die sich dadurch ergeben, dass die relative Position des Planetenrads 150 und der mit ihm verbundenen Kurbel 120 relativ zum Hohlrad 140 gedreht werden. Dabei zeigt Fig. 5b den größten wirksamen Hebel in 12-Uhr-Stellung (und damit gleichbedeutend auch in 6-Uhr-Stellung, was jedoch nicht dargestellt ist) und somit in der Nähe der beiden Totpunkte der Tretbewegung. Diese Anordnung entspricht einer Drehung der in den Fig. 4a - d dargestellten Ellipse um 90°. Bei der in Fig. 5a dargestellten Lage des längsten wirksamen Hebels bei einer nach schräg links oben ausgerichteten Stellung der Kurbel 120 (bzw. schräg nach rechts unten) ist die Ellipse nur um 45° im Uhrzeigersinn gedreht.

Obwohl vorstehend die Anwendung des Kurbeltriebs anhand von Beispielen im Zusammenhang mit Fahrrädern beschrieben wurden, kann der auch anderweitig eingesetzt werden. So ist es beispielsweise möglich, den Kurbeltrieb auch bei Fitnessgeräten wie z. B. einem Stepper einzusetzen, wodurch ein Bewegungsablauf erreicht werden kann, der der menschlichen Gehbewegung sehr nahe kommt. Durch entsprechende Veränderung des Übersetzungsverhältnisses und der Größe des Hohlrads sowie des Planetenrads sowie ggf. einer Drehung der Lage der elliptischen Bewegungsbahn bieten sich vielfältige Einstellmöglichkeiten. Die Drehung der Lage kann durch entsprechendes Fixieren (Klemmen) des in Fig. 3 geschwärzt gezeichneten Gehäuses in einer Buchse b im Rahmen 115 einfach realisiert werden. So eignet sich die in Fig. 5a gezeigte, schräg liegende Bahn insbesondere für Liegeräder, während mit der "liegenden" Bahn gemäß Fig. 5b eher ein Bewegungsablauf wie beim Gehen oder Laufen erreicht wird. Damit kann der Kurbeltrieb auch für alle Arten von Laufgeräten eingesetzt werden. Das Gehäuse des Kurbeltriebs kann auch mittig geteilt ausgeführt werden, um die Montage durch seitliches Einstecken in die Buchse b zu erleichtern. Hierzu kann auch ein bestehendes Lagerauge eines Rahmens 115 verwendet werden, insbesondere bei einer Nachrüstlösung. Jenes Gehäuse kann ebenso wie die Antriebsräder, Kurbel usw. neben Leichtmetall auch aus Kunststoff (insbesondere Polyamiden wie PA 6.6) oder auch aus Karbonfasern hergestellt werden.

Die Erfindung kann jedoch auch in sehr vorteilhafter Weise bei Motoren eingesetzt werden, um ein höheres Drehmoment zu erzielen und die jeweiligen Totpunkte bei Verbrennungsmotoren besser zu überwinden. Dies ermöglicht nicht nur eine höhere Leistungsausbeute bzw. einen geringeren Treibstoffbedarf, sondern kann auch beispielsweise bei Rasenmähern für eine erhebliche Lärmreduzierung durch Absenkung der erforderlichen Drehzahl, die für eine gewünschte Leistungsstufe erforderlich ist, erzielt werden. Bei Einsatz der vorliegenden Erfindung bei Motoren wird die Kraftankopplungsvorrichtung nicht als Pedal ausgebildet, sondern beispielsweise als Kurbelzapfen 12 (in Fig. 1 nur gestrichelt angedeutet), der für den Angriff einer Pleuelstange ausgebildet ist.

Die in Fig. 2 und 3 im 180°-Winkel angeordneten Kurbeln 20 können auch parallel verlaufend eingebaut werden, wie dies aus Antrieben von Rollstühlen an sich bekannt ist. Ein solcher Kurbeltrieb kann auch zum manuellen Antrieb von Booten eingesetzt werden, wobei sich dieser grundsätzlich für alle Fahrzeugarten eignet. Dabei kann auch ein Dynamo oder Generator im Bereich des Hohlrades 40 bzw. 140 integriert werden, so dass auch eine elektrische Leistungsübertragung (ebenso wie eine hydraulische oder pneumatische Übertragung) möglich ist.

Es ist festzuhalten, dass die unter Bezug auf einzelne Ausführungsformen beschriebenen Merkmale der Erfindung, wie beispielsweise die Ausgestaltung der Lagerungen und die Formgebung bei Hohlrad und Planetenrad, auch bei anderen Ausführungsformen vorhanden sein können, außer wenn es anders angegeben ist oder sich aus technischen Gründen von selbst verbietet. So ist es beispielsweise möglich, anstatt Evolventen-Verzahnungen auch andere dem Getriebefachmann bekannte Verzahnungsarten zu verwenden, beispielsweise sog. Stiftgetriebe, wie diese im Mühlen- oder Windenbau seit langem eingesetzt werden.

## Patentansprüche

1. Kurbeltrieb (10; 110) mit einer Vorrichtung zur periodischen Änderung der Länge von dessen wirksamem Hebel, umfassend
eine Kraftankopplungsvorrichtung (11; 12),
wenigstens eine Kurbel (20; 120) mit einem ersten, freien Ende (21; 121) und einem zweiten Ende (22; 122),
eine durch ein Wellenlager (31; 131) drehbar gelagerte Welle (30; 130), an die die Kurbel (20; 120) angekoppelt wird,
ein Hohlrad (40; 140),
ein Planetenrad (50; 150), und
eine erste Lagereinrichtung (60), die das Planetenrad (50; 150) In ständig kämmendem Eingriff mit dem Hohlrad (40; 140) lagert, wobei die Kurbel (20) im Bereich des zweiten Endes (22) drehfest mit der Welle (30) verbunden ist, das Hohlrad (40) im Bereich des ersten Endes (21) der Kurbel (20) drehfest mit der Kurbel (20) verbunden ist, **dadurch gekennzeichnet, dass** das Planetenrad (50) drehfest mit der Kraftankopplungsvorrichtung (11; 12) verbunden ist.

2. Kurbeltrieb (10) nach Anspruch 1,
**dadurch gekennzeichnet, dass** das Hohlrad (40) in Axialrichtung mit der Kurbel (20) verbunden ist.

3. Kurbeltrieb (10) nach Anspruch 1,
**dadurch gekennzeichnet, dass** die Kurbel (20) einstückig mit dem Hohlrad (40) ausgebildet ist.

4. Kurbeltrieb (10) nach einem der Ansprüche 1 bis 3,
**dadurch gekennzeichnet, dass** die erste Lagereinrichtung (60) zwei Lagerscheiben (62, 63) umfasst, die die beiden Stirnseiten des Hohlrads (40) bedecken und koaxial zum Hohlrad (40) drehbar am Hohlrad (40) gelagert sind, wobei die Lagerscheiben (62, 63) eine zweite Lagereinrichtung (64) für die Lagerung des Planetenrads (50) aufweisen.

5. Kurbeltrieb (10) nach einem der Ansprüche bis 3,
**dadurch gekennzeichnet, dass** die erste Lagereinrichtung (60) einen Hebel (66) umfasst, der im Bereich eines ersten Endes (67) seiner beiden Enden im Zentrum des Hohlrads (40) drehbar gelagert ist und im Bereich seines zweiten Endes (68) das Planetenrad (50) drehbar lagert.

6. Kurbeltrieb (10) nach einem der Ansprüche 1 bis 5,
**dadurch gekennzeichnet, dass** der Kurbeltrieb (10) punktsymmetrisch zu einem Punkt auf der Mittellinie der Wolle (30) ausgebildet und die Kraftankopplungsvorrichtung (11) als Fahrradpedal ausgebildet ist, wobei an der Welle (30) ein Kettenrad (33) oder ein Zahnriemenrad angebracht ist oder eine Kardanwelle (34) angreift.

7. Kurbeltrieb (10; 110) nach einem der Ansprüche 1 bis 6,
**dadurch gekennzeichnet, dass** die Kraftankopplungsvorrichtung (12) mit der Pleuelstange eines Motors verbunden ist.

## Claims

1. Crank drive (10; 110) with an apparatus to the periodic change of the length of its effective lever, comprising
a force coupling device (11; 12),
at least one crank (20; 120) with a first free end (21; 121) and a second end (22; 122),
a shaft (30; 130), mounted to rotate in a shaft bearing (31; 131) and being coupled to the crank (20; 120),
a ring gear (40; 140),
a planetary gear (50; 150), and
a first bearing means (60), which supports the planetary gear (50; 150) in permanent engagement with the ring gear (40; 140), wherein the crank (20) is rotationally fixed to the shaft (30) in the range of the second end (22) and the ring gear (40) is rotationally fixed to the crank (20) in the range of the first end (21) of the crank (20), **characterised in that**
the planetary gear (50) is rotationally fixed to the force coupling device (11; 12).

2. Crank drive (10) according to claim 1, **characterised in that**
the ring gear (40) is connected to the crank (20) in axial direction.

3. Crank drive (10) according to claim 1, **characterised in that**
the crank (20) is integrally formed with the ring gear (40).

4. Crank drive (10) according to one of claims 1 to 3, **characterised in that**
the first bearing means (60) includes two bearing disks (62, 63), which cover the two face sides of the ring gear (40) and which are coaxially arranged to and rotatably supported to the ring gear (40), wherein the bearing disks (62, 63) have a second bearing means (64) for supporting the planetary gear (50).

5. Crank drive (10) according to one of claims 1 to 3, **characterised in that**
the first bearing means (60) includes a lever (66), which is rotatably supported in the range of a first end (67) of its two ends in the center of the ring gear (40) and rotatably journals the planetary gear (50) in the range of its second end (68).

6. Crank drive (10) according to one of claims 1 to 5, **characterised in that**
the crank drive (10) is point-symmetrically formed to a point on the center line of the shaft (30) and the force coupling device (11) is formed as a bicycle pedal, wherein the shaft (30) is attached to a chain wheel (33) or a toothed belt wheel or engages with a cardan shaft (34).

7. Crank drive (10; 110) according to one of claims 1 to 6, **characterised in that**
the force coupling device (12) is connected to a rod of a motor.

## Revendications

1. Mécanisme (10; 110) à manivelle, équipé d'un dispositif de modification périodique de la longueur de son levier actif, comprenant
un dispositif (11 ; 12) d'application de forces,
au moins une manivelle (20 ; 120) offrant une première extrémité libre (21 ; 121) et une seconde extrémité (22 ; 122),
un arbre (30 ; 130) monté à rotation par l'intermédiaire d'un palier (31 ; 131), et avec lequel la manivelle (20 ; 120) est accouplée,
une roue creuse (40 ; 140),
un pignon satellite (50 ; 150), et
un premier système de montage (60) assurant le montage du pignon satellite (50 ; 150) en prise permanente d'engrènement avec la roue creuse (40 ; 140), sachant que la manivelle (20) est assujettie en rotation à l'arbre (30) dans la région de la seconde extrémité (22), et que la roue creuse (40) est assujettie en rotation à ladite manivelle (20) dans la région de la première extrémité (21) de ladite manivelle (20), **caractérisé par le fait que** le pignon satellite (50) est assujetti en rotation au dispositif (11 ; 12) d'application de forces.

2. Mécanisme (10) à manivelle, selon la revendication 1,
**caractérisé par le fait que** la roue creuse (40) est reliée à la manivelle (20) dans la direction axiale.

3. Mécanisme (10) à manivelle, selon la revendication 1,
**caractérisé par le fait que** la manivelle (20) est réalisée d'un seul tenant avec la roue creuse (40).

4. Mécanisme (10) manivelle, selon l'une des revendication 1 à 3,
**caractérisé par le fait que** le premier système de montage (60) englobe deux disques de portée (62, 63) qui recouvrent les deux faces extrêmes de la roue creuse (40) et sont montés rotatifs sur ladite roue creuse (40), coaxialement à ladite roue creuse (40), lesdits disques de portée (62, 63) présentant un second système de montage (64) affecté au montage du pignon satellite (50).

5. Mécanisme (10) à manivelle, selon l'une des revendications 1 à 3,
**caractérisé par le fait que** le premier système de montage (60) englobe un levier (66) qui est monté à rotation au centre de la roue creuse (40), dans la région d'une première extrémité (67) parmi ses deux extrémités, et assure le montage rotatif du pignon satellite (50) dans la région de sa seconde extrémité (68).

6. Mécanisme (10) à manivelle, selon l'une des revendications 1 à 5,
**caractérisé par le fait que** ledit mécanisme (10) à manivelle est réalisé avec symétrie ponctuelle vis-à-vis d'un point situé sur l'axe médian de l'arbre (30), et le dispositif (11) d'application de forces est réalisé sous la forme d'une pédale de bicyclette, une roue (33) à chaîne ou une roue à courroie, ou bien un arbre de Cardan (34), venant en prise avec ledit arbre (30).

7. Mécanisme (10 ; 110) à manivelle, selon l'une des revendications 1 à 6,
**caractérisé par le fait que** le dispositif (12) d'application de forces est relié à la bielle motrice d'un moteur.
